# EUROPÄISCHE PATENTSCHRIFT

(11) **EP 3 154 813 B1**
(45) Veröffentlichungstag und Bekanntmachung des Hinweises auf die Patenterteilung: **08.01.2020**
(21) Anmeldenummer: 15729082.6
(22) Anmeldetag: 11.06.2015
(51) Int. Cl.: B60K 37/06, G05G 9/047, G06F 3/0338

(54) **UMSCHALTBARE BEDIENVORRICHTUNG FÜR EIN KRAFTFAHRZEUG**
SWITCHABLE OPERATING DEVICE FOR A MOTOR VEHICLE
DISPOSITIF DE COMMANDE COMMUTABLE POUR VÉHICULE AUTOMOBILE

(30) Priorität: 14.06.2014 DE 102014008851
(43) Veröffentlichungstag der Anmeldung: 19.04.2017
(73) Patentinhaber: Audi AG, 85045 Ingolstadt (DE)
(72) Erfinder: BOUAZIZ, Tahar, 85055 Ingolstadt (DE)
(74) Vertreter: Brandt, Kai
(86) Internationale Anmeldenummer: PCT/EP2015/001172
(87) Internationale Veröffentlichungsnummer: WO 2015/188936

(56) Entgegenhaltungen:
- WO-A1-99/27435

## Beschreibung

Die Erfindung betrifft ein Verfahren zum abwechselnden Steuern zweier Steuermodule eines Kraftfahrzeugs. Die Steuermodule können beispielsweise Bestandteil eines Infotainmentsystems oder einer zentralen Prozessoreinrichtung sein und jeweils zum Steuern einer Klimatisierung oder Medienwiedergabe oder Navigationsassistenz ausgelegt sein. Zu der Erfindung gehören auch eine Bedienvorrichtung zum Durchführen des Verfahrens sowie ein Kraftfahrzeug mit der Bedienvorrichtung.

Bei einem Kraftfahrzeug können mehrere Funktionalitäten durch ein einzelnes Steuergerät oder eine zentrale Prozessoreinrichtung bereitgestellt sein. Im Zusammenhang mit dem Infotainment wird eine solche zentrale Prozessoreinrichtung als Infotainmentsystem bezeichnet. Dieses stellt beispielsweise als Funktionalitäten eine Navigationsassistenz, eine Medienwiedergabe und Telefonie bereit. Jede dieser Funktionalitäten wird durch dafür vorgesehene Steuermodule bereitgestellt. Jedes Steuermodul lässt sich dabei mit derselben Bedienvorrichtung bedienen, beispielsweise einem Dreh-Drück-Steller. Ein solcher Dreh-Stück-Steller weist einen Bedienknopf auf, der sich um eine Drehachse drehen lässt und translatorisch entlang der Drehachse durch Drücken auslenken lässt. Es kann auch vorgesehen sein, dass der Drehknopf zusätzlich quer zur Drehachse ausgelenkt werden kann, was auch als Vier-Wege-Funktion bezeichnet wird.

Auf einem Bildschirm des Infotainmentsystems kann ein Bedienmenü angezeigt werden, welches die Funktionen auflistet, die mit dem Bedienknopf beispielsweise durch Drehen desselben ausgewählt werden können und zwar jeweils bei demjenigen Steuermodul, mit dem die Bedienvorrichtung gerade gekoppelt ist.

Mittels der Bedienvorrichtung muss dann auch zwischen den Steuermodulen umgeschaltet werden können, um ein anderes der Steuermodule bedienen zu können.

Hierzu sieht die EP 1 122 633 A2 vor, auf dem Bildschirm rund um das Bedienmenü einen Randbereich anzuzeigen, in welchem die Namen der verfügbaren Steuermodule an bestimmten Positionen angezeigt werden. Durch Kippen des Bedienknopfes in eine entsprechende Auslenkrichtung kann dann zu dem jeweiligen Steuermodul umgeschaltet werden, wodurch dann das zugehörige Bedienmenü auf dem Bildschirm angezeigt wird.

Aus der DE 10 2009 052 928 A1 ist ebenfalls ein Dreh-Drück-Steller bekannt, mit dem ein Bedienmenü eines Infotainmentsystems bedient werden kann. Um zwischen Steuermodulen umzuschalten, sind neben dem Dreh-Drück-Steller weitere mechanische Bedienknöpfe zum Auswählen eines Steuermoduls bereitgestellt.

Aus der DE 296 04 717 U1 ist eine Bedienvorrichtung für ein Kraftfahrzeug bekannt, bei welcher mittels eines Dreh-Drück-Stellers mit Vier-Wege-Funktion zwischen den Steuermodulen mittels eines speziellen Bedienmenüs umgeschaltet werden kann.

Im Stand der Technik kann sich ein Problem ergeben, wenn zwei Steuermodule zugleich aktiv sind, beispielsweise ein Medienwiedergabemodul Musik abspielt und ein Navigationsassistenzmodul eine Fahrroute angibt. Bedient der Benutzer beispielsweise das Navigationsassistenzmodul, um ein Navigationsziel festzulegen, und möchte er dabei zwischendurch beispielsweise das gerade von dem Medienwiedergabemodul abgespielte Lied ändern, so muss er zunächst das Bedienmenü für die Navigationsassistenz verlassen, das Bedienmenü für die Medienwiedergabe aktivieren, dort das neue Lied auswählen und dann wieder zurück zur Navigationsassistenz wechseln. Dann muss sich der Fahrer wieder neu in dem Bedienmenü für die Navigationsassistenz orientieren und vielleicht sogar verloren gegangene Einstellungen rekonstruieren.

Das Dokument WO99/27435 A1 offenbart den Oberbegriff des Anspruchs 1.

Der Erfindung liegt die Aufgabe zugrunde, in einem Kraftfahrzeug das abwechselnde Bedienen zweier Steuermodule mittels ein und derselben Bedienvorrichtung zu ermöglichen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Durch die Erfindung wird eine Bedienvorrichtung für ein Kraftfahrzeug weitergebildet, welche in an sich bekannter Weise einen Drehsteller mit einem um eine Drehachse drehbar ausgestalteten Bedienknopf aufweist. Der Drehsteller kann beispielsweise als Bestandteil eines Dreh-Drück-Stellers ausgestaltet sein. Der Drehsteller erzeugt in bekannter Weise bei Drehen des Bedienknopfes ein Stellsignal. Zusätzlich ist der Bedienknopf quer zur Drehachse translatorisch auslenkbar ausgestaltet. Mit anderen Worten lässt sich der Bedienknopf also z.B. in einer Translationsebene senkrecht zur Drehachse verschieben oder bezüglich der Drehachse um einen Fußpunkt verkippen.

Um nun mittels des Drehstellers abwechselnd zwei Steuermodule bedienen zu können, ist bei der erfindungsgemäßen Bedienvorrichtung eine Koppeleinrichtung zum Koppeln der Bedienvorrichtung an ein erstes und an ein zweites Steuermodul vorgesehen. Diese Koppeleinrichtung ist dazu ausgestaltet, dass das Stellsignal, das beim Drehen des Bedienknopfes erzeugt wird, in einer ersten Schaltstellung der Koppeleinrichtung ausschließlich an das erste Steuermodul und in einer zweiten Schaltstellung ausschließlich an das zweite Steuermodul ausgegeben wird. Um zwischen diesen beiden Schaltstellungen umzuschalten, muss ein Benutzer einfach den Bedienknopf in eine vorbestimmte Auslenkrichtung quer zur Drehachse translatorisch auslenken, also schieben öder kippen. Mit anderen Worten ist bei einem translatorischen Auslenken des Bedienknopfes in eine vorbestimmte Auslenkstellung vorgesehen, dass von der ersten in die zweite Schaltstellung umgeschaltet wird.

Die erfindungsgemäße Bedienvorrichtung weist den Vorteil auf, dass der Benutzer durch Drehen des Bedienknopfes das erste Steuermodul bedienen oder steuern kann, weil beim Drehen ein entsprechendes Stellsignal erzeugt und an das erste Steuermodul übertragen wird. Lenkt der Benutzer dann einfach kurz den Bedienknopf translatorisch aus, stößt oder tippt er ihn also einmal quer zur Drehachse an, so wechselt die Koppeleinrichtung in die zweite Schaltstellung und der Benutzer kann dann direkt das zweite Steuermodul durch Drehen des Bedienknopfes steuern.

Bevorzugt ist der Bedienknopf monostabil gelagert, das heißt eine Rückstelleinrichtung ist dazu ausgelegt, den Bedienknopf nach dem translatorischen Auslenken in eine Ruhestellung zurückzubewegen. Dann weist der Bedienknopf stets dieselbe Ruhestellung auf, unabhängig davon, ob der Drehsteller gerade mit dem ersten oder dem zweiten Steuermodul gekoppelt ist. Der Benutzer muss also nicht selbst manuell den Bedienknopf hin- und herschieben. Die Rückstelleinrichtung kann z.B. mittels einer mechanischen Feder oder eines Elektromotors realisiert werden.

Besonders bevorzugt ist vorgesehen, dass die Koppeleinrichtung dazu ausgelegt ist, nach einer vorbestimmten Zeitdauer nach dem Umschalten wieder in die erste Schaltstellung zurückzuschalten. Mit anderen Worten kann der Benutzer dann den Bedienknopf kurz antippen, um ihn translatorisch auszulenken, dann eine Einstellung in dem zweiten Steuermodul durch Drehen des Bedienknopfes vornehmen und muss dann keine weitere Maßnahme mehr ergreifen, sondern der Drehsteller wird automatisch, das heißt selbsttätig durch die Bedienvorrichtung wieder mit dem ersten Steuermodul gekoppelt. Hierdurch kann der Benutzer also besonders einfach und schnell einen Zwischenbedienungsschritt in dem zweiten Steuermodul vornehmen und kann dann mit der Bedienung des ersten Steuermoduls fortfahren.

Für den Fall, dass der Benutzer nicht die Zeitdauer für das Zurückschalten abwarten möchte, sieht eine vorteilhafte Weiterbildung vor, dass die Bedienvorrichtung dazu ausgelegt ist, bei nochmaligem Auslenken in die Auslenkrichtung oder bei Auslenken in die entgegengesetzte Auslenkrichtung die Koppeleinrichtung wieder in die erste Schaltstellung zurückzuschalten. Der Benutzer kann also besonders schnell einmal den Bedienknopf antippen, eine Einstellung in dem zweiten Steuermodul vornehmen und dann durch erneutes Antippen des Bedienknopfes in dieselbe Auslenkrichtung oder in die entgegengesetzte Auslenkrichtung wieder zur Bedienung des ersten Steuermoduls zurückkehren.

Besonders bevorzugt ist es, dass die Bedienvorrichtung dazu ausgelegt ist, nach Aktivieren einer Funktion des zweiten Steuermoduls danach die Koppeleinrichtung wieder in die erste Schaltstellung zurückzuschalten. Mit anderen Worten kann der Benutzer also den Bedienknopf kurz antippen, dann in dem zweiten Steuermodul eine Funktion auswählen und diese mit dem Drehsteller aktivieren, wodurch dann zusätzlich auch die Koppeleinrichtung wieder in die erste Schaltstellung zurückschaltet, sodass die Bedienung am ersten Steuermodul fortgesetzt werden kann.

Die Bedienvorrichtung weist in besonders bevorzugter Ausführungsform auch eine Anzeigeeinrichtung auf, beispielsweise einen Bildschirm oder ein Head-up-Display. Die Anzeigeeinrichtung ist dazu ausgelegt, auf einer Anzeigefläche eine grafische Benutzeroberfläche für das erste Steuermodul anzuzeigen, also beispielsweise ein Bedienmenü oder andere grafische Objekte, die mittels des Drehstellers ausgewählt werden können. Zusätzlich zeigt die Anzeigeeinrichtung an einem Rand der Anzeigefläche eine Statusanzeige des zweiten Geräts an. Die Statusanzeige ändert sich mit einem Betriebszustand des zweiten Steuermoduls. Handelt es sich bei dem zweiten Steuermodul beispielsweise um ein Medienwiedergabemodul, so kann ein Titel des aktuell wiedergegebene Mediums, beispielsweise einer Lieddatei oder eines Videos, dort angezeigt werden. Es kann auch beispielsweise angegeben werden, wie weit das entsprechende Stück schon wiedergegeben worden ist, also beispielsweise eine Abspieldauer. Der Benutzer erhält dann auf der Anzeigefläche in besonders vorteilhafter Weise einen Überblick sowohl über die Bedienmöglichkeiten des ersten Steuermoduls als auch einen Betriebsstatus des zweiten Steuermoduls.

Auf der Bedienoberfläche kann eine Bedienung mittels des Drehstellers ermöglicht sein. Hierbei wird dann bevorzugt ein Auswahlelement zum Auswählen von grafischen Bedienflächen, also beispielsweise Menüeinträgen oder anderen grafischen Objekten, wie beispielsweise Icons, bereitgestellt. Das Auswahlelement kann beispielsweise einen Zeiger und/oder eine Markierung einer grafischen Bedienfläche umfassen. Die Bedienvorrichtung ist dazu ausgelegt, das Auswahlelement in der ersten Schaltstellung der Koppeleinrichtung auch auf die Benutzeroberfläche auszurichten. Wird dann die Koppeleinrichtung in die zweite Schaltstellung umgeschaltet, sodass der Drehsteller nun mit dem zweiten Steuermodul gekoppelt ist, so wird entsprechend das Auswahlelement auf die Statusanzeige ausgerichtet. Das Auswahlelement springt also von der Bedienoberfläche für das erste Steuermodul in die Statusanzeige des zweiten Steuermoduls.

Hierbei ergibt sich ein weiterer Vorteil, wenn Einstellungen der Benutzeroberfläche des ersten Steuermoduls beibehalten werden, während das Auswahlelement auf die Statusanzeige ausgerichtet ist. Hierdurch kann ein Bedienvorgang des ersten Steuermoduls nach dem Zurückschalten in die erste Schaltstellung ohne Unterbrechung fortgesetzt werden.

Bisher wurde die Bedienvorrichtung in der Weise beschrieben, dass mit ihr lediglich zwei Steuermodule bedient werden können. Natürlich ist die Bedienvorrichtung dazu vorgesehen, auch mehr als zwei Steuermodule in dem Kraftwagen zu bedienen. Hierbei ist erfindungsgemäß vorgesehen, dass bei der Bedienvorrichtung das erste Steuermodul auswechselbar ist. Mit anderen Worten ist eine Umschalteinrichtung vorgesehen, die dazu ausgelegt ist, zwischen mehreren vorbestimmten Steuermodulen umzuschalten und hierdurch eines dieser Steuermodule als das erste Steuermodul festzulegen. Wird dabei die beschriebene Bedienoberfläche bereitgestellt, so kann also zwischen unterschiedlichen Bedienoberflächen für unterschiedliche Steuermodule, beispielsweise Navigation, Telefonie, Internetbrowsing, umgeschaltet werden und währenddessen in der Statusanzeige stets das zweite Steuermodul, beispielsweise die Medienwiedergabe, angezeigt werden. Der Benutzer kann dann jederzeit durch translatorisches Auslenken des Bedienknopfes von dem gerade aktiven ersten Steuermodul, beispielsweise der Navigation, in die Statusanzeige oder allgemein zur Bedienung des zweiten Steuermoduls umschalten, um dort eine Zwischenbedienung vorzunehmen, also einen einzelnen oder wenige Bedienhandlungen vorzunehmen, um dann wieder zum ersten Steuermodul zurückzuschalten.

Durch die Erfindung ist auch ein Kraftfahrzeug bereitgestellt, welcher sich durch eine Ausführungsform der erfindungsgemäßen Bedienvorrichtung auszeichnet. Bevorzugt ist das Kraftfahrzeug als Kraftwagen, insbesondere als Personenkraftwagen, ausgestaltet.

Bei dem erfindungsgemäßen Kraftfahrzeug handelt es sich bei dem ersten Steuermodul zumindest um ein Navigationsmodul und/oder Telefoniemodul und/oder Klimatisierungsmodul.

Bei dem zweiten Steuermodul handelt es sich bevorzugt um ein Medienwiedergabemodul.

Schließlich gehört zu der Erfindung auch ein Verfahren zum abwechselnden Steuern zweier Steuermodule eines Kraftfahrzeugs durch eine Bedienvorrichtung mit einem Drehsteller. In der beschriebenen Weise wird auch bei dem Verfahren ein Stellsignal, das bei Drehen eines um eine Drehachse drehbar gelagerten Bedienknopfes des Drehstellers erzeugt wird, ausschließlich an ein erstes der Steuermodule ausgegeben und bei Erkennen einer quer zur Drehachse gerichteten translatorischen Auslenkung des Bedienknopfes das Stellsignal ausschließlich an das zweite Steuermodul ausgegeben. Diese Ausgabe des Stellsignals an das zweite Steuermodul ist aber zeitlich begrenzt, nämlich sie erfolgt nur so lange, bis ein Rückschaltkriterium erfüllt ist. Bei dem Rückschaltkriterium kann es sich um eines oder mehrere der bereits beschriebenen Ereignisse zum Auslösen des Rückschaltens handeln, also beispielsweise ein erneutes translatorisches Auslenken oder der Ablauf der beschriebenen Zeitdauer oder das Auslösen einer Funktion am zweiten Steuermodul.

Zu der Erfindung gehören auch Weiterbildungen des erfindungsgemäßen Verfahrens, die Merkmale aufweisen, wie sie bereits im Zusammenhang mit der erfindungsgemäßen Bedienvorrichtung beschrieben worden sind. Aus diesem Grund unterbleibt hier eine Beschreibung der entsprechenden Weiterbildungen des erfindungsgemäßen Verfahrens.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Fig. zeigt von einem Kraftfahrzeug 10 eine zentrale Prozessoreinrichtung 12, bei der es sich beispielsweise um ein Infotainmentsystem handeln kann. Die Prozessoreinrichtung 12 kann mehrere Steuermodule 14, 16, 18, 20 aufweisen, durch welche jeweils eine vorbestimmte Funktionalität der Prozessoreinrichtung 12 bereitgestellt sein kann. Beispielsweise kann es sich bei dem Steuermodul 14 um ein Navigationsmodul, bei dem Steuermodul 16 um ein Telefoniemodul, dem Steuermodul 18 um ein Internetmodul zum Austauschen von Daten mit dem Internet und bei dem Steuermodul 20 um ein Medienwiedergabemodul zum Ausgeben von Mediendaten über ein Audiosystem 22 in einen Fahrzeuginnenraum handeln. Jedes Steuermodul kann hierbei ein Programmmodul und/oder eine elektronische Schaltung umfassen. In dem gezeigten Beispiel ist bei dem Steuermodul 20 vorgesehen, dass dieses mit einem Speicher 24 für Audiodaten, beispielsweise MP3-Dateien, und einem Radioempfänger 26 zum Empfangen von Radiofunkt gekoppelt sein kann. Das Steuermodul 20 kann dabei zwischen dem Speicher 24 und dem Radio 26 umschalten. Das Steuermodul 20 ist in dem gezeigten Beispiel mit dem Speicher 24 gekoppelt und spielt eine Wiedergabeliste oder Playlist 28 mit Liedern SNG1, SNG2, SNG3 aus dem Speicher 24 ab. Für das gezeigte Beispiel sei angenommen, dass das Steuermodul 20 gerade das Lied SNG1 abspielt, was durch eine Listenstellung 30 symbolisiert ist.

Zum Bedienen der Steuermodule 14, 16, 18, 20 kann die Prozessoreinrichtung 12 eine Bedienvorrichtung 32 aufweisen. Die Bedienvorrichtung 32 kann beispielsweise in einer Mittelkonsole des Kraftfahrzeugs 10 angeordnet sein. Die Bedienvorrichtung 32 kann einen Drehsteller 34, eine Auswerteeinrichtung 36, beispielsweise eine Auswerteschaltung, und eine Anzeigeeinrichtung 38 aufweisen, die beispielsweise einen Bildschirm in einer Mittelkonsole oder ein Head-up-Display umfassen kann.

Der Drehsteller 34 kann einen Bedienknopf 40 aufweisen, der um eine Drehachse 42 drehbar gelagert sein kann und translatorisch entlang Auslenkrichtungen 44, 46, 48 auslenkbar ausgestaltet sein kann. Der Drehsteller 34 erzeugt bei Drehen des Drehknopfes 40 ein Stellsignal S.

Die Auswerteeinrichtung 36 kann eine Koppeleinrichtung 50 und eine Umschalteinrichtung 52 aufweisen. Mit der Koppeleinrichtung 50 kann abwechselnd zwischen der Umschalteinrichtung 52 und dem Steuermodul 20 umgeschaltet werden. Das Steuermodul 20 stellt ein zweites Steuermodul im Sinne der Erfindung dar.

Mit der Umschalteinrichtung 52 kann zwischen den übrigen Steuermodulen 14, 16, 18 umgeschaltet werden. Das gerade mit der Umschalteinrichtung 52 ausgewählte Steuermodul 14 stellt ein erstes Steuermodul dar.

Die Anzeigeeinrichtung 38 kann auf einer Anzeigefläche 54, also beispielsweise der Bildschirmoberfläche, eine Bedienoberfläche GUI für das gerade durch die Umschalteinrichtung 52 ausgewählte Steuermodul 14 aufweisen. An einem in dem Beispiel unteren Rand der Anzeigefläche 54 kann eine Statusanzeige STS für das zweite Steuermodul, das Steuermodul 20, angezeigt werden. Die Statusanzeige STS kann in dem Beispiel angeben, dass gerade der Speicher 24 genutzt wird (Anzeige MP3), gerade das Lied SNG1 der Playlist 28 abgespielt wird und das Lied 1 gerade zu einem bestimmten Prozentsatz, beispielsweise 35 Prozent, bereits abgespielt ist.

Die Bedienoberfläche GUI kann beispielsweise ein Bedienmenü 56 aufweisen. In dem Bedienmenü 56 kann ein Auswahlelement 58, beispielsweise eine Markierung oder (hier nicht dargestellt) ein.Zeiger, auf einen momentan ausgewählten Menüpunkt M1 ausgerichtet sein. Durch Drehen des Bedienknopfes 40 kann ein Benutzer das Auswahlelement 58 auf einen anderen Menüpunkt M2 verschieben. Die Menüeinträge oder Menüpunkte M1, M2 stellen auswählbare graphische Objekte dar.

Durch Umschalthinweise 60 ist dem Benutzer auf der Anzeigefläche 54 angezeigt, dass er durch translatorisches Auslenken des Bedienknopfes 40 in eine der Auslenkrichtungen 44, 46 die Umschalteinrichtung 52 umschalten kann und hierdurch eine Bedienoberfläche für eines der anderen Steuermodule 16, 18 aktivieren kann. Durch dieses Umschalten wird dann die Bedienoberfläche GUI ausgeblendet.

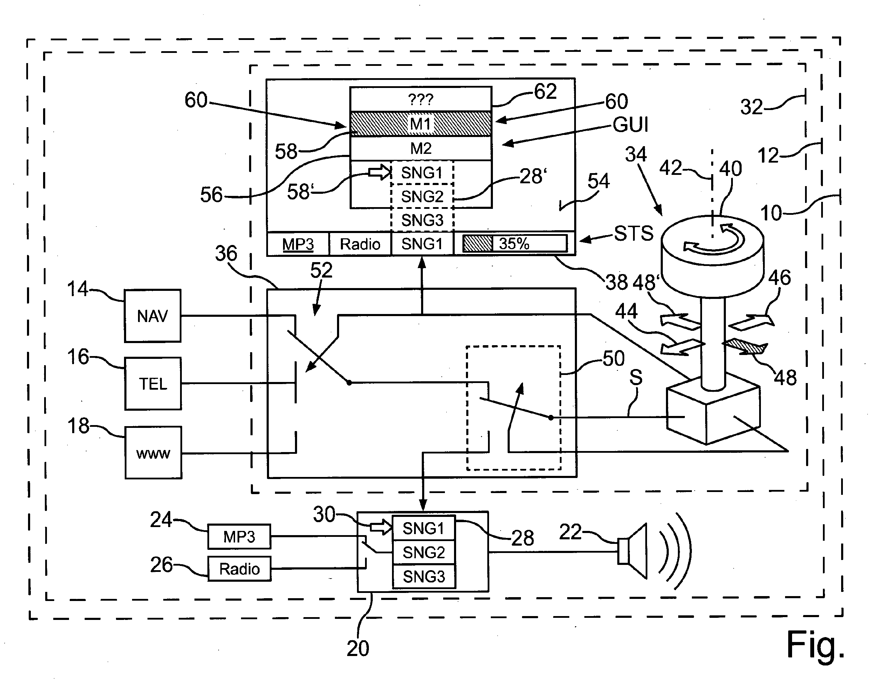

Der Benutzer kann aber zum schnellen Umschalten für eine Bedienung des Steuermoduls 20 den Bedienknopf 40 in eine vorbestimmte Auslenkrichtung, hier die Auslenkrichtung 48 (schraffierter Richtungspfeil), auslenken. Dann wird anstelle der Umschalteinrichtung 52 die Koppeleinrichtung 50 in eine zweite Schaltstellung umgeschaltet und der Drehsteller 54 ist dann mit dem Steuermodul 20 gekoppelt. Dann kann beispielsweise vorgesehen sein, dass durch Drehen des Bedienknopfes 40 die aktuelle Listenstellung 30 verändert werden kann. Dabei kann vorgesehen sein, dass durch die Anzeigeeinrichtung 38 auf der Anzeigefläche 54 das Auswahlelement 58 von der Bedienoberfläche GUI hin zur Statusanzeige STS umgelenkt wird. Beispielswise kann vorgesehen sein, dass eine Abbildung 28' der Wiedergabeliste 28 angezeigt wird und anstelle des Auswahlelements 58 ein Auswahlelement 58' für die Wiedergabeliste 28 bereitgestellt wird, welches mittels des Bedienknopfes 40 umgestellt werden kann. Die Bedienoberfläche GUI kann währenddessen weiter auf der Anzeigefläche 54 angezeigt bleiben.

Es kann dann vorgesehen sein, dass der Benutzer durch erneutes translatorisches Auslenken des Bedienknopfes 40 in die Auslenkrichtung 48 oder in die entgegengesetzte Auslenkrichtung 48' (unschraffierter Richtungspfeil) wieder zurück zur Bedienoberfläche GUI schalten kann.

Es kann auch vorgesehen sein, dass nach einer vorbestimmten Zeitdauer selbsttätig die Koppeleinrichtung 50 wieder zurück zur Umschalteinrichtung 52 schaltet. Es kann auch vorgesehen sein, dass mit dem Auswählen eines neuen Liedes auch die Koppeleinrichtung 50 wieder zurück zu der Umschalteinrichtung 52 schaltet.

Die Bedienoberfläche GUI kann auch ein Suchfeld 62 aufweisen, in welches der Benutzer einen Suchbegriff zum Suchen beispielsweise im Bedienmenü 56 eingeben kann. Während der Benutzer mit dem Bedienknopf 40 im Bedienmenü 56 navigiert, also die Koppeleinrichtung 50 auf die Umschalteinrichtung 52 eingestellt ist, kann durch Schieben des Bedienknopfes 40 beispielsweise in die Auslenkrichtung 48' auch vorgesehen sein, dass man auf dem ersten Element der Liste landet, das heißt auf dem Suchfeld 62.

Insgesamt zeigt das Beispiel, wie durch die Erfindung mit einem Dreh-Drück-Steller mit Vier-Wege-Funktion ein einfacher Wechsel zwischen zwei zu bedienenden Geräten ermöglicht werden kann.

## Patentansprüche

1. Bedienvorrichtung (32) für ein Kraftfahrzeug (10), wobei die Bedienvorrichtung (32) einen Drehsteller (34) mit einem um eine Drehachse (42) drehbar ausgestalteten Bedienknopf (40) aufweist und der Drehsteller (34) dazu ausgelegt ist, bei Drehen des Bedienknopfes (40) ein Stellsignal (S) zu erzeugen, und wobei der Bedienknopf (40) quer zur Drehachse (42) translatorisch auslenkbar (44, 46, 48, 48') ausgestaltet ist, wobei eine Koppeleinrichtung (50) zum Koppeln der Bedienvorrichtung (32) an ein erstes Steuermodul (14) und an ein zweites Steuermodul (20) vorgesehen ist, wobei die Koppeleinrichtung (32) dazu ausgestaltet ist, das Stellsignal (S) in einer ersten Schaltstellung ausschließlich an das erste Steuermodul (14) und in einer zweiten Schaltstellung ausschließlich an das zweite Steuermodul (20) auszugeben und bei einem translatorischen Auslenken des Bedienknopfes (40) in eine vorbestimmte Auslenkrichtung (48) von der ersten in die zweite Schaltstellung umzuschalten,
**dadurch gekennzeichnet, dass**
eine Umschalteinrichtung (52) vorgesehen ist, die dazu ausgelegt ist, zwischen mehreren vorbestimmten Steuermodulen (14, 16, 18) umzuschalten und hierdurch eines der Steuermodule (14, 16, 18) als das erste Steuermodul (14) festzulegen.

2. Bedienvorrichtung (32) nach Anspruch 1, wobei der Bedienknopf (40) monostabil gelagert ist und eine Rückstelleinrichtung dazu ausgelegt ist, den Bedienknopf (40) nach dem translatorischen Auslenken in eine Ruhestellung zurückzubewegen.

3. Bedienvorrichtung (32) nach einem der vorhergehenden Ansprüche, wobei die Koppeleinrichtung (50) dazu ausgelegt ist, nach einer vorbestimmten Zeitdauer nach dem Umschalten wieder in die erste Schaltstellung zurückzuschalten.

4. Bedienvorrichtung (32) nach einem der vorhergehenden Ansprüche, wobei die Bedienvorrichtung (32) dazu ausgelegt ist,
- bei nochmaligem Auslenken in die Auslenkrichtung (48) oder
- bei Auslenken in die entgegengesetzte Auslenkrichtung (48') oder
- nach Aktivieren einer vorbestimmten Funktion des zweiten Steuermoduls (20) durch die Bedienvorrichtung (32)
danach die Koppeleinrichtung (50) wieder in die erste Schaltstellung zurückzuschalten.

5. Bedienvorrichtung (32) nach einem der vorhergehenden Ansprüche, wobei eine Anzeigeeinrichtung (38) der Bedienvorrichtung (32) dazu ausgelegt ist, auf einer Anzeigefläche (54) eine graphische Benutzeroberfläche (GUI) für das erste Steuermodul (14, 16, 18) anzuzeigen und an einem Rand der Anzeigefläche (54) eine Statusanzeige (STS) des zweiten Steuermoduls (20) anzuzeigen.

6. Bedienvorrichtung (32) nach Anspruch 5, wobei ein Auswahlelement (58, 58') zum Auswählen von graphischen Bedienflächen (56) bereitgestellt ist und die Bedienvorrichtung (32) dazu ausgelegt ist, das Auswahlelement (58, 58') in der ersten Schaltstellung der Koppeleinrichtung (50) auf die Benutzeroberfläche (GUI) und in der zweiten Schaltstellung der Koppeleinrichtung (50) auf die Statusanzeige (STS) auszurichten.

7. Bedienvorrichtung (32) nach Anspruch 6, wobei Einstellungen der Benutzeroberfläche (GUI) beibehalten werden, während das Auswahlelement (58, 58') auf die Statusanzeige (STS) ausgerichtet ist.

8. Kraftfahrzeug (10) mit einer Bedienvorrichtung (32) nach einem der vorhergehenden Ansprüche.

9. Kraftfahrzeug (10) nach Anspruch 8, wobei als das erste Steuermodul (14) zumindest eines aus den folgenden bereitgestellt ist: Navigationsmodul (14), Telefoniemodul (16), Klimatisierungsmodul, Internetmodul (18).

10. Kraftfahrzeug (10) nach Anspruch 8 oder 9, wobei als das zweite Steuermodul (20) ein Medienwiedergabemodul an die Bedienvorrichtung (32) angekoppelt ist.

11. Verfahren zum abwechselnden Steuern zweier Steuermodule (14, 20) eines Kraftfahrzeugs (10) durch ein Bedienvorrichtung (32) mit einem Drehsteller (34), wobei ein Stellsignal (S), das bei Drehen eines um eine Drehachse (42) drehbar gelagerten Bedienknopfs (40) erzeugt wird, ausschließlich an ein erstes der Steuermodule (14) ausgegeben wird und wobei bei Erkennen einer quer zur Drehachse (42) gerichteten translatorischen Auslenkung des Bedienknopfes (40) bis zum Erfülltsein eines Rückschaltkriteriums das Stellsignal (S) ausschließlich an ein zweites der Steuermodule (20) ausgegeben wird,
**dadurch gekennzeichnet, dass**
eine Umschalteinrichtung (52) zwischen mehreren vorbestimmten Steuermodulen (14, 16, 18) umschaltet und hierdurch eines der Steuermodule (14, 16, 18) als das erste Steuermodul (14) festlegt.

## Claims

1. Operating device (32) for a motor vehicle (10), wherein the operating device (32) has a rotary actuator (34) having an operating knob (40) designed rotatable about a rotational axis (42) and the rotary actuator (34) is configured to generate an actuating signal (S) when the operating knob (40) is turned, and wherein the operating knob (40) is designed able to be deflected (44, 46, 48, 48') in a translational manner transversely to the rotational axis (42), wherein a coupling device (50) for coupling the operating device (32) to a first control module (14) and to a second control module (20) is provided, wherein the coupling device (32) is configured to output the actuating signal (S) in a first switching position exclusively to the first control module (14) and in a second switching position exclusively to the second control module (20) and in the case of a translational deflection of the operating knob (40) into a predetermined deflection direction (48) to switch from the first into the second switching position,
**characterised in that**
a switching device (52) is provided which is configured to switch between several predetermined control modules (14,16,18) and thus to define one of the control modules (14, 16, 18) as the first control module (14).

2. Operating device (32) according to claim 1, wherein the operating knob (40) is mounted in a monostable manner and a return device is configured to return the operating knob (40) after the translational deflection into a rest position.

3. Operating device (32) according to any of the preceding claims, wherein the coupling device (50) is configured after a predetermined time duration after the switching to switch back again into the first switching position.

4. Operating device (32) according to any of the preceding claims, wherein the operating device (32) is configured,
- if deflected again in the deflection direction (48) or
- at a deflection in the opposite deflection direction (48') or
- after activating a predetermined function of the second control module (20) by means of the operating device (32)
subsequently to switch the coupling device (50) back into the first switching position.

5. Operating device (32) according to any of the preceding claims, wherein a display device (38) of the operating device (32) is configured to display on a display surface (54) a graphical user interface (GUI) for the first control module (14, 16, 18) and at a border of the display surface (54) to display a status indicator (STS) of the second control module (20).

6. Operating device (32) according to claim 5, wherein a selection element (58, 58') for selecting graphical operating surfaces (56) is provided and the operating device (32) is configured to align the selection element (58, 58') in the first switching position of the coupling device (50) onto the user interface (GUI) and in the second switching position of the coupling device (50) onto the status indicator (STS).

7. Operating device (32) according to claim 6, wherein settings of the user interface (GUI) are retained while the selection element (58, 58') is aligned onto the status indicator (STS).

8. Motor vehicle (10) having an operating device (32) according to any of the preceding claims.

9. Motor vehicle (10) according to claim 8, wherein as the first control module (14) is provided at least one of the following: navigation module (14), telephony module (16), air-conditioning module, Internet module (18).

10. Motor vehicle (10) according to claim 8 or 9, wherein as the second control module (20) a media playback module is coupled to the operating device (32).

11. Method for the alternating controlling of two control modules (14, 20) of a motor vehicle (10) on the part of an operating device (32) having a rotary actuator (34), wherein an actuating signal (S), which is generated by turning an operating knob (40) mounted rotatably about a rotational axis (42), is outputted exclusively to a first of the control modules (14) and wherein upon recognition of a translational deflection, oriented transversely to the rotational axis (42), of the operating knob (40) until a return criterion has been fulfilled the actuating signal (S) is outputted exclusively to a second of the control modules (20),
**characterised in that**
a switching device (52) switches between several predetermined control modules (14, 16, 18) and thereby defines one of the control modules (14, 16, 18) as the first control module (14).

## Revendications

1. Dispositif de commande (32) pour un véhicule automobile (10), dans lequel le dispositif de commande (32) présente un actionneur rotatif (34) avec un bouton de commande (40) configuré rotatif autour d'un axe de rotation (42) et l'actionneur rotatif (34) est conçu pour générer lors de la rotation du bouton de commande (40) un signal de réglage (S), et dans lequel le bouton de commande (40) est configuré déviable par translation (44, 46, 48, 48') transversalement à l'axe de rotation (42), dans lequel un dispositif de couplage (50) est prévu pour le couplage du dispositif de commande (32) à un premier module de commande (14) et à un deuxième module de commande (20), dans lequel le dispositif de couplage (32) est configuré pour émettre le signal de réglage (S) dans une première position de commutation exclusivement au premier module de commande (14) et dans une deuxième position de commutation exclusivement au deuxième module de commande (20) et commuter lors d'une déviation par translation du bouton de commande (40) dans une direction de déviation (48) prédéterminée de la première à la deuxième position de commutation,
**caractérisé en ce que**
un dispositif de commutation (52) est prévu, qui est conçu pour commuter entre plusieurs modules de commande (14, 16, 18) prédéterminés et définir ainsi un des modules de commande (14, 16, 18) en tant que premier module de commande (14).

2. Dispositif de commande (32) selon la revendication 1, dans lequel le bouton de commande (40) est logé monostable et un dispositif de rappel est conçu pour ramener le bouton de commande (40) après la déviation par translation dans une position de repos.

3. Dispositif de commande (32) selon l'une quelconque des revendications précédentes, dans lequel le dispositif de couplage (50) est conçu pour commuter après une durée prédéterminée après la commutation à nouveau dans la première position de commutation.

4. Dispositif de commande (32) selon l'une quelconque des revendications précédentes, dans lequel le dispositif de commande (32) est conçu
- dans le cas d'une nouvelle déviation dans la direction de déviation (48) ou
- en cas de déviation dans la direction de déviation opposée (48') ou
- après l'activation d'une fonction prédéterminée du deuxième module de commande (20) par le dispositif de commande (32)
pour commuter ensuite le dispositif de couplage (50) à nouveau dans la première position de commutation.

5. Dispositif de commande (32) selon l'une quelconque des revendications précédentes, dans lequel un dispositif d'affichage (38) du dispositif de commande (32) est conçu pour approprier une surface utilisateur graphique (GUI) pour le premier module de commande (14, 16, 18) sur une surface d'affichage (54) et approprier un affichage d'état (STS) du deuxième module de commande (20) à un bord de la surface d'affichage (54).

6. Dispositif de commande (32) selon la revendication 5, dans lequel un élément de sélection (58, 58') est mis à disposition pour la sélection de surfaces de commande graphiques (56) et le dispositif de commande (32) est conçu pour orienter l'élément de sélection (58, 58') dans la première position de commutation du dispositif de couplage (50) sur la surface utilisateur (GUI) et dans la deuxième position de commutation du dispositif de couplage (50) sur l'affichage d'état (STS).

7. Dispositif de commande (32) selon la revendication 6, dans lequel des réglages de la surface utilisateur (GUI) sont conservés, pendant que l'élément de sélection (58, 58') est orienté sur l'affichage d'état (STS).

8. Véhicule automobile (10) avec un dispositif de commande (32) selon l'une quelconque des revendications précédentes.

9. Véhicule automobile (10) selon la revendication 8, dans lequel au moins un des éléments suivants est mis à disposition en tant que premier module de commande (14) : module de navigation (14), module de téléphonie (16), module de climatisation, module internet (18).

10. Véhicule automobile (10) selon la revendication 8 ou 9, dans lequel un module de restitution de média est accouplé au dispositif de commande (32) en tant que deuxième module de commande (20).

11. Procédé de commande alternée de deux modules de commande (14, 20) d'un véhicule automobile (10) par un dispositif de commande (32) avec un actionneur rotatif (34), dans lequel un signal de réglage (S), qui est généré lors de la rotation d'un bouton de commande (40) logé rotatif autour d'un axe de rotation (42), est émis exclusivement à un premier des modules de commande (14) et dans lequel le signal de réglage (S) est émis exclusivement à un deuxième des modules de commande (20) lors de la détection d'une déviation par translation du bouton de commande (40) dirigée transversalement à l'axe de rotation (42) jusqu'à ce qu'un critère de commutation inverse soit rempli,
**caractérisé en ce que**
un dispositif de commutation (52) commute entre plusieurs modules de commande (14, 16, 18) prédéterminés et définit ainsi un des modules de commande (14, 16, 18) en tant que premier module de commande (14).
